# EUROPEAN PATENT APPLICATION

(11) **EP 1 331 544 A1**
(43) Date of publication of application: **30.07.2003**
(21) Application number: 02354018.0
(22) Date of filing: 25.01.2002
(51) Int. Cl.: G06F 1/16

(54) **A portable computer and uses thereof**

(71) Applicant: Hewlett-Packard Company, A Delaware Corporation, Palo Alto, CA 94304 (US)
(72) Inventor: Neuman, Paul, 38640 Claix (FR)
(74) Representative: Lloyd, Richard Graham (GB)

(57) **Abstract**

A portable computer having first and second displays, preferably flat panel displays, the displays facing generally away from one another whereby visual information may be conveyed to viewers situated on either side of the computer.

## Description

### Background to and Summary of the Invention

This invention relates to the general field of portable computers - sometimes known as laptop and notebook computers - that are designed to be transported easily and which therefore have a compact design. Typically, portable computers of this type comprise a main housing containing a nonvolatile storage device such as a Hard Disc Drive (HDD), a volatile memory such as RAM and a variety of input facilities such as CD ROM, DVD and floppy drives. Portable computers are also typically provided with a flat panel display device such as an LCD (Liquid Crystal Display) screen by which visual information is conveyed to a user of the machine. The flat panel display is typically provided on one side of a hinged cover which, in a closed position, overlies the keyboard, finger-trace pad and other input devices of the computer, thus protecting the screen against damage when the computer is not in use.

Whilst portable computers are well-suited to personal, discreet, use, they do not lend themselves particularly well to use during commercial presentations and the like, as the screen is of limited size and not readily visible by persons situated away from the computer keyboard.

### Summary of the Prior Art

US patent 5,977,933 (S3, Incorporated) recognises this drawback and provides a display control system for a portable computer that is able to drive a built-in flat panel display in conjunction with a separate external CRT (Cathode Ray Tube) display or an NTSC/PAL (National Television Standards Committee/Phase Alternation by Line) television monitor.

Whilst the system described in US'933 allows visual data to be conveyed via different output devices, the requirement of a separate CRT display or television monitor constitutes a heavy economic and ergonomic burden.

Similarly, whilst modern operating systems allow multi-monitor operation, giving an output that can be spread across two or more monitors, (see the "Dual Head" ® display technology of Matrox Corporation, for example, at www.matrox.com/mga/products/mill_g450/features_dh.cfm) these approaches do nothing to alleviate the requirement of a plurality of separate monitors, with it being an object of the present invention to provide a portable computer that overcomes or at least reduces these and other drawbacks.

### Summary of the Invention

In accordance with a first aspect of the present invention, there is provided a portable computer having first and second displays, the displays facing generally away from one another whereby visual information may be conveyed to viewers situated on either side of the computer.

The displays preferably are flat panel display screens, such as LCD screens, for example.

Preferably, the displays are generally parallel with one another.

The portable computer may comprise a generally hinged assembly, the displays forming part of one leaf thereof.

The displays may be driven by a single graphics card.

One of the displays may be provided with a detachable cover.

The cover may be operative, when positioned over said display, to turn off, disable or otherwise disengage the display.

In this way, the power consumption of the computer may substantially be reduced when a dual display capability is not required.

One of the displays, in use, may be effective to convey advertising or other such promotional information to an audience.

In accordance with a second aspect of the present invention, there is provided a method of conveying advertising, promotional or other such business-related information to an audience during a presentation, the presentation being conducted using a portable computer having first and second displays facing generally away from one another, the advertising, promotional or other such business-related information being conveyed by the second display.

The first and second displays preferably are generally parallel with one another, the first display being used to convey information to a presenter that is different to that conveyed to the audience.

The advertising, promotional or other such business-related information may be conveyed using a screen-saver or the like.

The invention, in its second aspect, may comprise one or more of the features discussed in the preceding paragraphs.

### Brief Description of the Drawings

The invention will now be described in greater detail, but strictly by way of example, with reference to the accompanying drawings, of which:
FIGURE 1 is a perspective view, from one side and above, of a portable computer in an open, operative, condition;
FIGURE 2 is a somewhat similar view of the computer of Figure 1, from the other side;
FIGURE 3 is a side view of the computer of Figures 1 and 2 showing a detachable cover for one of the displays; and
FIGURE 4 shows how the invention can be used to convey advertising material and the like by way of a screen-saver.

### Detailed Description of the Drawings and Best Mode of the Invention

Referring to the drawings, a portable computer 10 such as a laptop has a body 11 comprising a base and hinged lid parts 12 and 13, the base part 12 housing a keyboard 14, in generally conventional manner. The lid 13, on an inner face 15 thereof, is provided with an LCD flat panel display 16, whereby visual information may be conveyed to a user of the computer. The computer, however, is also provided with an LCD flat panel display 17 on an outer face 18 of the lid 13 whereby information may also be conveyed to viewers situated on the other side of the computer.

Both the flat panel displays 16 and 17 are driven, in this example, by a single graphics card such as a Matrox Millennium G450 graphics card, to reduce the hardware cost of the assembly and to minimise the amount of wiring and expansion card slots that are required. It will however be understood that separate graphics cards could conceivably be used to drive each of the displays 16 and 17, using, for example, the multiple monitor capability provided by Microsoft Windows® 98, 98SE, 2000 and ME.

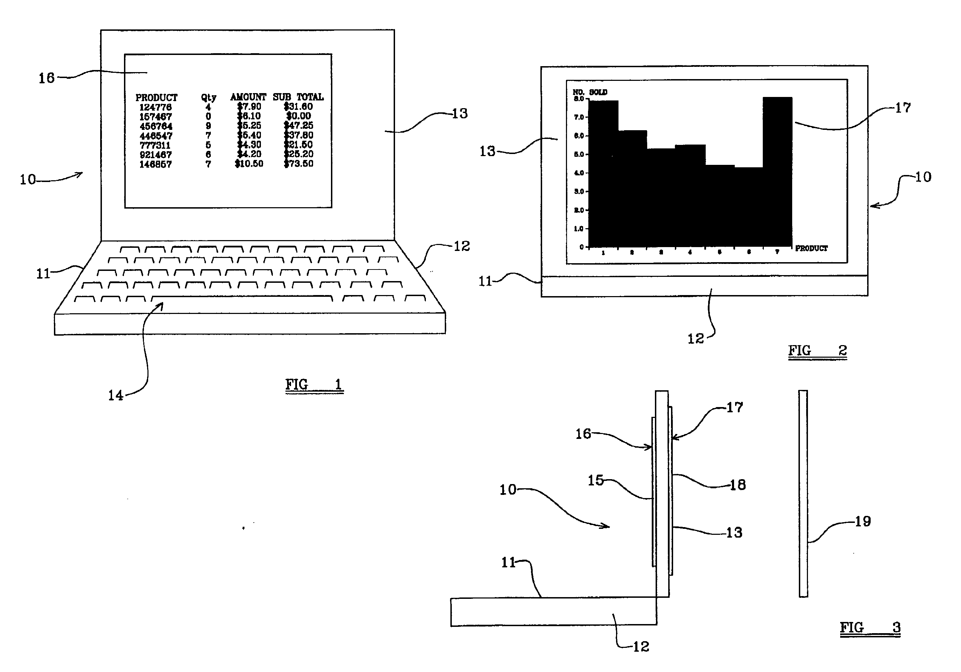

As will be appreciated, the provision of two flat panel displays as integral components of a portable computer, allows information to be conveyed to persons who are not able to see the output on the conventional screen 16. Moreover, the multi-display functionality provided by "Dual Head" graphics drivers or by the use of a number of separate graphics drivers allows different visual information to be conveyed from both screens. Thus, where a user gives a presentation, the first display screen 16 could be used to convey "raw" numerical information to the presenter (see Figure 1) whereas the outwardly disposed second display screen 17 may be used to convey more readily comprehensible data formats such as graphics and moving images, as shown in Figure 2.

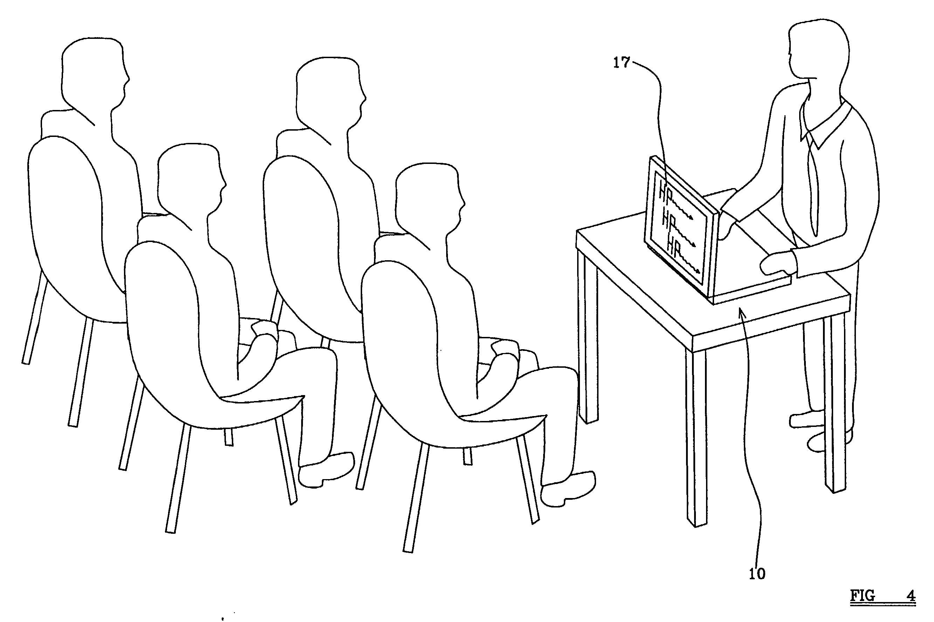

As shown in Figure 4, the second display 17 can also be used in an advertising/promotional manner, by running appropriate software such as screen-saver routines during a presentation, and arranging the computer so that the second screen is visible to an audience.

Finally, as shown in Figure 3, the portable computer 10 is also provided with a detachable cover 19 which is releasably attachable to the lid 13 of the computer to conceal the second display from view. Although not shown in the drawings, the cover 19 is provided with a number of appropriately configured protrusions which, when the cover is positioned over the display 17, are operative to disconnect the supply of power to the screen 17 thus greatly reducing the power consumption of the assembly. The protrusions may be operative to engage a display power switch, although it will be understood that other means (e.g. magnetic) could be employed to effect disengagement of the display.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A portable computer having first and second displays, the displays facing generally away from one another whereby visual information may be conveyed to viewers situated on either side of the computer.

2. A portable computer according to Claim 1 wherein the displays are generally parallel with one another.

3. A portable computer according to Claim 1 or Claim 2 comprising a generally hinged assembly, the displays forming part of one leaf thereof.

4. A portable computer according to Claim 1, Claim 2 or Claim 3 wherein the displays are driven by a single graphics card.

5. A portable computer according to any one of the preceding claims wherein one of the displays is provided with a detachable cover.

6. A portable computer according to Claim 5 wherein the cover is operative, when positioned over said display, to turn off, disable or otherwise disengage the display.

7. A portable computer according to any one of the preceding claims wherein one of the displays, in use, is effective to convey advertising or other such promotional information to an audience.

8. A method of conveying advertising, promotional or other such business-related information to an audience during a presentation, the presentation being conducted using a portable computer having first and second displays facing generally away from one another, the advertising, promotional or other such business-related information being conveyed by the second display.

9. A method according to Claim 8 wherein the first and second displays are generally parallel with one another, the first display being used to convey information to a presenter that is different to that conveyed to the audience.

10. A method according to Claim 8 or Claim 9 wherein the advertising, promotional or other such business-related information is conveyed using a screen-saver or the like.
